# EUROPÄISCHE PATENTSCHRIFT

(11) **EP 0 940 597 B1**
(45) Veröffentlichungstag und Bekanntmachung des Hinweises auf die Patenterteilung: **15.05.2002**
(21) Anmeldenummer: 99103645.0
(22) Anmeldetag: 25.02.1999
(51) Int. Cl.: F16D 25/10, F16H 63/30

(54) **Druckmittelbeaufschlagbare Schaltkupplung**
Pressure actuated shift coupling
Embrayage avec commutateur actionné sous pression

(30) Priorität: 03.03.1998 DE 19808855
(43) Veröffentlichungstag der Anmeldung: 08.09.1999
(73) Patentinhaber: CLAAS Industrietechnik GmbH, 33106 Paderborn (DE)
(72) Erfinder: Brockschmidt, Detlev, Dipl.-Ing., 33428 Harsewinkel (DE)
(74) Vertreter: Weeg, Thomas

(56) Entgegenhaltungen:
- WO-A-88/00661
- DE-A- 4 220 622
- GB-A- 179 700
- US-A- 3 303 914
- US-A- 4 482 039

## Beschreibung

Die Erfindung bezieht sich auf eine druckmittelbeaufschlagbare Schaltkupplung, bei der drehfest und axial auf einer Welle verschiebbare Kupplungsringe mit einer Verzahnung zur Übertragung der Antriebskraft durch ein in Druckräume einleitbares Druckmittel mit entsprechenden Kupplungsringen mit entsprechender Verzahnung in Eingriff bringbar sind.

Eine mit einem Druckmittel beaufschlagbare Schaltkupplung ist aus der WO 88/00661 bekannt. Dort sind zwei schaltbare Einzelkupplungen für ein stufenlos lastschaltbares Getriebe gezeigt, die von einem Druckmittel in eine Eingriffstellung bewegbar sind. Die Kupplungen sind als formschlüssige Zahnkupplungen in der Sonderform einer Planverzahnung ausgebildet, bei der die Zahnprofile der zu kuppelnden Teile in axialer Richtung angeordnet sind. Durch die axial angeordneten Zähne kann der Schaltweg der zu kuppelnden Teile sehr kurz gehalten werden, da die spezifische Pressung an den Zähnen durch den hohen Flächenanteil der Zähne gering gehalten werden kann. Als nachteilig hat sich jedoch die bisher bekannte Abdichtung des Druckraumes erwiesen. Die radial angeordneten Dichtungselemente rufen durch ihre Vorspannung unerwünschte zusätzliche axiale Reibkräfte hervor, wenn die Kupplung bewegt wird. Diese Reibkräfte sind nur schwer im Voraus bestimmbar und über die Lebensdauer der Kupplung hinweg veränderlich. Je nach Auslegung des Flankenwinkels der Zahnprofile kann die zusätzliche axiale Reibkraft bewirken, dass die Kupplung nicht mehr selbsttätig ausschaltet und hängen bleibt. Ein größerer Winkel der Planverzahnung kann das Problem lösen, allerdings ergibt sich der Nachteil, dass danach die durch das Druckmittel erzeugte Haltekraft sehr groß werden muß mit wiederum entsprechend großzügig ausgelegten Bauteilen, wodurch der Bauraumgewinn durch die planen Zähne schnell wieder verloren ist.

Die Schrift US 4,482,039 offenbart eine Schaltkupplung, in welcher eine drehende Welle mittels Pressluft axial verschoben werden soll, um die Welle außer Eingriff mit der Verzahnung des Abtriebs zu bringen. Die drehende Welle wird von einem nicht drehenden Gehäuse umfasst, in das Druckluft einleitbar ist. Eingeleitete Druckluft wirkt gegen einen drehfest mit der Welle verbundenen und rotierenden Kolbenring, der die Schubbewegung auf die Welle überträgt. Zwischen der drehenden Welle und dem nicht drehenden Gehäuse und dem Außenumfang des Kolbenrings und den umfassenden Innenflächen des Druckgehäuses gibt es keinerlei Abdichtungen. Wenn Druckmittel in die gezeigte Kupplung eingeleitet wird, ist mit erheblichen Druckverlusten über die nicht abgedichteten Spalte zwischen rotierender Welle und feststehendem Gehäuse bzw. dem rotierenden Außenumfang des rotierenden Kolbenrings und den stationären Innenflächen des Druckgehäuses zu rechnen.

Um Druckverluste an den Nahtstellen zwischen beweglichen und feststehenden Teilen einer Schaltkupplung mit Druckgehäuse möglichst gering zu halten, sind in der US 3,303,914 ebenfalls Dichtelemente gezeigt, die entweder im feststehenden Schließring oder in den beweglichen Kolbenteilen so angeordnet sind, dass sie ständig über die gegenüberliegende Fläche des beweglichen bzw. feststehenden Kupplungselements gleiten. Auch hier stellt sich das Problem, dass die Dichtungen wegen der ständigen Gleitbewegung verschleißbehaftet sind und das Schaltverhalten verschleißabhängig beeinträchtigen. Wenn die Dichtungen neu sind, liegen sie besonders fest auf den gegenüberliegenden Flächen auf und bremsen auf diese Weise eine Schaltbewegung der Kupplungselemente. Später, wenn die Dichtungen zunehmend verschlissen sind, ist eine Bewegung der Kupplungselemente leichter möglich, allerdings nehmen auch die Leckverluste der Dichtungen entsprechend zu.

In der US 3,303,914 sind auch zwei Membrandichtungen gezeigt, die jeweils von einem Kolben gegen eine Federkraft auf die Durchströmöffnung zu bewegbar sind. Zur Betätigung der Membrandichtungen sind also separate Kolben erforderlich, die den Bauaufwand erhöhen. Auch die Membrandichtungen selbst sind wegen der abstehenden Federn aufwendig in der Herstellung. Die Membrandichtungen liegen nicht an der Nahtstelle zwischen beweglichen und stationären Teilen einer Kupplung. Die gezeigten Membrandichtungen sind ungeeignet, große Druckunterschiede voneinander abzudichten. Die Andrückung der Membrandichtung durch den Kolben erfolgt nicht im Bereich der Dichtzone, sondern im Bereich der Feder. Im Dichtungsbereich selbst kann die Membrandichtung nur vom Druckmittel selbst auf die Dichtungszone gedrückt werden. Eine zuverlässige Abdichtung ist so nur möglich, wenn die Flächen der Membranen sehr fest ausgelegt sind, um größeren Druckunterschieden standhalten zu können, dann können sie sich jedoch nicht mehr flexibel der Dichtfläche anpassen. Werden sie flexibler ausgelegt, beulen sie sich unter Druck aus und werden vom Druckmittel bei größeren Druckunterschieden in die abzudichtende Öffnung gedrückt. Weiter ist zu beachten, daß die gezeigten Membrandichtungen auch nur dann ihre Dichtfunktion erfüllen können, wenn sie zuerst vom Kolben in die Richtung der Dichtzone bewegt werden und erst danach der Druck in dem abzudichtenden Raum erhöht wird. Wird der Druck erhöht, bevor eine Membrandichtung in ihrer Dichtstellung aufliegt, kann Druckmittel die Membrandichtung hinterströmen, und der Druckunterschied, durch den die Membrandichtung auf die Dichtfläche gedrückt werden soll, ist zu gering, um eine sichere Dichtwirkung zu gewährleisten. Die Funktionsweise der Dichtung verzögert also das Schaltverhalten der Kupplung, was für einige Schaltanwendungen nicht akzeptabel ist.

Demgemäß ist es die Aufgabe der vorliegenden Erfindung, eine druckmittelbeaufschlagbare Schaltkupplung so auszugestalten, dass die beweglichen von den unbeweglichen Teilen der Schaltkupplung auch bei größeren Druckunterschieden möglichst sicher mit geringem Bauaufwand abgedichtet werden, und dabei trotzdem nur geringe Reibkräfte und wenig Verschleiß auftreten.

Die Aufgabe wird gelöst, indem die Innenflächen eines im wesentlichen aus den Kupplungsringen und einem Schließring gebildeten beweglichen Mitnehmers und eines feststehenden Druckrings jeweils teilweise einen Druckraum begrenzen, wobei die Nahtstellen zwischen den beweglichen und feststehenden Innenflächen des Druckraumes gegeneinander abdichtbar sind, indem die Dichtungen so im Bereich einer Nahtstelle angeordnet sind, daß sich Dichtungen bei einer axialen Verschiebung des Mitnehmers erst bei Erreichen einer Endposition des Mitnehmers auf eine gegenüberliegende Dichtfläche auflegen, erst dann die abzudichtende Nahtstelle verschließen und deshalb nicht ständig in Kontakt sind mit der Wandung der gegenüberliegenden Dichtfläche des Druckraumes.

Die erfindungsgemäße Lösung kann auch darin bestehen, dass die Innenflächen eines im wesentlichen aus den Kupplungsringen und Schließring gebildeten beweglichen Mitnehmers und eines feststehenden Druckrings jeweils teilweise einen Druckraum begrenzen, wobei die Nahtstellen zwischen den beweglichen und feststehenden Innenflächen des Druckraumes gegeneinander abdichtbar sind, indem Dichtungen so im Bereich einer Nahtstelle angeordnet sind, daß eine bewegbare Dichtung während eines Kupplungsvorganges auf den Druckring aufsetzbar ist und/oder eine bewegbare Wandung der Kupplungsringe auf eine Dichtung aufsetzbar ist. Bei einer solchen Anordnung der Dichtelemente werden zusätzliche Reibkräfte in der Kupplung vermieden, die Planverzahnung kann einen gewünschten günstigen Verzahnungswinkel erhalten, die selbsttätige Ausschaltung bleibt unverändert sicher und die Abmessungen der Kupplungen können sehr klein gehalten werden. Weitere vorteilhafte Ausgestaltungen und Varianten der beanspruchten Erfindung finden sich in den Unteransprüchen, auf die insoweit verwiesen wird.

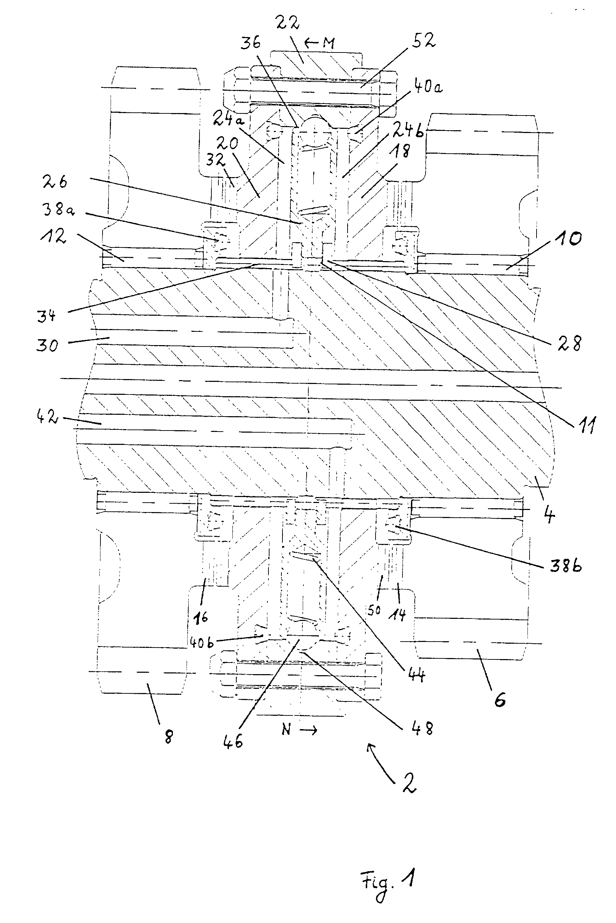

Die Erfindung wird nun anhand eines Ausführungsbeispiels erläutert. In Figur 1 ist ein Querschnitt durch eine erfindungsgemäße, mit Druckmittel beaufschlagbare Schaltkupplung 2 zu sehen, und zwar in Form einer Doppelkupplung. Die zu schaltenden Elemente auf der Welle 4 sind die Zahnräder 6, 8 als Losräder, die über Lagerungen 10, 12 auf der Welle 4 drehbar angeordnet sind. An jeweils einer Seite der Zahnräder 6, 8 sind axial angeordnete Zähne 14, 16 angebracht. Zwischen den beiden Zahnrädern 6, 8 ist die eigentliche Schaltkupplung 2 angeordnet. Sie besteht im wesentlichen aus einem Mitnehmer, der vorzugsweise über eine Verzahnung drehfest, aber axial verschiebbar auf der Welle 4 angeordnet ist. Der Mitnehmer wird im wesentlichen gebildet durch die Kupplungsringe 18, 20 und den Schließring 22. Der Mitnehmer 18, 20, 22 umgreift die Druckräume 24a, 24b sowie einen darin befindlichen, auf der Welle 4 abgestützten Druckring 26, der axial unverschieblich auf der Welle 4 mit Wellensicherungsringen 28 angeordnet ist. Der Druckraum 24a wird also seitlich von der Welle 4, dem Druckring 26, dem Schließring 22 und dem Kupplungsring 20 umgrenzt, während der Druckraum 24b von der Welle 4, dem Druckring 26, dem Schließring 22 und dem Kupplungsring 18 umgrenzt ist.

Die Kupplung muß betätigt werden, um eine Antriebskraft auf eines der Zahnräder 6, 8 zu leiten. Dies geschieht, indem ein Druckmittel in einen Druckraum 24a, 24b geleitet wird. Soll beispielsweise das Zahnrad 8 zugeschaltet werden, so muß Druckmittel in den Druckraum 24a gelangen. Das Schalten erfolgt bevorzugt bei einer zumindest angenäherten Drehzahl der Welle 4 und des Zahnrades 8. Zum Zuschalten des Zahnrades 8 wird ein Druckmittel durch den Kanal 30 in den Druckraum 24a gegeben. Der Mitnehmer 18, 20, 22 bewegt sich aufgrund des sich im Druckraum 24a aufbauenden Druckes und des hydrostatisch wirkenden Druckmittels in Richtung des Pfeils M, und die Verzahnungen 16, 32 kommen miteinander in Eingriff. Während der Bewegung des Mitnehmers 18, 20, 22 ist der Druckraum 24a jedoch nicht vollständig dicht, Lecköl kann durch die Kurzverzahnung 34 und den Spalt 36 aus dem Druckraum 24a austreten. Zunächst muß also die Menge des zugeführten Druckmittels größer sein als die durch die Spalten und Verzahnungen austretenden Leckölmengen. Zusätzlich muß die Menge an zugeführtem Druckmittel ausreichen, um den wachsenden Druckraum 24a mit Druckmittel füllen zu können. Die Tiefe des Zahnprofils und der Hubweg, den der Mitnehmer 18, 20, 22 zurücklegen muß, um die Verzahnungen 16, 32 miteinander sicher in Eingriff zu bringen, sollten vorteilhaft so aufeinander abgestimmt sein, dass der Mitnehmer 18, 20,22 annähernd seinen Endanschlag erreicht, wenn die Zahnprofile ausreichend sicher für eine Übertragung von Antriebsleistung miteinander verzahnt sind. Für kurze Schaltwege, leichtes Einlegen und Trennen der jeweiligen Gänge, hohe übertragbare Drehmomente und geringe Schaltgeräusche ist es vorteilhaft, wenn die Verzahnungen 16, 32 als Planverzahnung ausgebildet sind, deren Flanken eine Trapezverzahnung zeigen, die eine kraftabweisende Komponente aufweist. Eine solche Verzahnung löst sich selbsttätig, wenn der Druckraum 24a, 24b drucklos geschaltet wird. Erst jetzt, bei ausreichend tiefer Verzahnung der Verzahnung 16, 32 im Bereich des Endanschlages des Mitnehmers 18, 20, 22, wird die Außenfläche des Kupplungsrings 20 auf die Dichtung 38a gedrückt, und die auf der Innenseite des Kupplungsrings 18 befindliche Dichtung 40a dichtet den Spalt 36 ab. Damit ist der Druckraum 24a nahezu vollständig abgedichtet. Die Dichtungen 38a, 38b, 40a, 40b sind in geeignet ausgeformten Nuten, beispielsweise Schwalbenschwanznuten angeordnet, in denen sie sich bei entsprechender Querschnittsform selbst halten können. Die Dichtungen 38a 38b, 40a, 40b sollten bevorzugt aus elastischem Material hergestellt sein.

Fertigungstoleranzen, die zu einem ungleichmäßigen Traganteil der Dichtringe 38a, 40a führen könnten, werden durch ein entsprechend großes Axialspiel zwischen dem Druckring 26 und den Wellensicherungsringen 28 aufgefangen. Zwischen dem Druckring 26 und der Welle 4 kann zusätzlich eine Dichtung 11 angeordnet sein, die den Druckring 26 trotz des Spiels, mit dem er montiert ist, gegen Leckölverluste abdichtet.

Soll das Zahnrad 6 zugeschaltet werden, so wird Kanal 42 mit Druckmittel beaufschlagt. Die Funktionsweise ist analog zur vorstehend beschriebenen Funktionsweise, nur mit dem Unterschied, dass sich nun der Mitnehmer 18, 20, 22 in Richtung N bewegt und schließlich die Dichtungen 38b, 40b den Druckraum 24b abdichten und die Verzahnungen 14, 50 ineinandergreifen.

Wenn kein Zahnrad geschaltet werden soll, werden die Kanäle 30, 42 drucklos geschaltet. Über ein Rastsystem, bestehend aus Federn 44 und Kugeln 46, die in eine auf der Innenseite des Schließrings 22 umlaufende Nut 48 einrasten können, wird eine sichere Neutralstellung der Kupplung 2 erzielt. Dieses Kugel-/Federsystem unterstützt ebenfalls ein schnelles Ausschalten eine gekuppelten Zahnrads 6, 8 bei Drucklosschaltung der Kupplung.

Bei Ausgestaltung der Kupplung 2 als Doppelkupplung ist es vorteilhaft, wenn der Mitnehmer 18, 20, 22 aus Gründen der Fertigungsvereinfachung aus zwei identischen Teilen 18, 20 besteht, wobei diese zusammen mit dem Schließring 22 von Schrauben 52 oder in der Wirkung vergleichbaren Befestigungsmitteln zusammengehalten werden.

## Patentansprüche

1. Druckmittelbeaufschlagbare Schaltkupplung, bei der drehfest und axial auf einer Welle verschiebbare Kupplungsringe (18, 20) mit einer Verzahnung zur Übertragung der Antriebskraft durch ein in Druckräume einleitbares Druckmittel mit entsprechenden Kupplungsringen (6, 8) mit entsprechender Verzahnung in Eingriff bringbar sind,
**dadurch gekennzeichnet,**
**daß** die Innenflächen eines im wesentlichen aus den Kupplungsringen (18, 20) und einem Schließring (22) gebildeten beweglichen Mitnehmers und eines feststehenden Druckrings (26) jeweils teilweise einen Druckraum (24a, 24 b) begrenzen, wobei die Nahtstellen zwischen den beweglichen und feststehenden Innenflächen des Druckraumes (24a, 24b) gegeneinander abdichtbar sind, indem Dichtungen (38a, 38b, 40a, 40b) so im Bereich einer Nahtstelle angeordnet sind, daß sich die Dichtungen (38a, 38b, 40a, 40b) bei einer axialen Verschiebung des Mitnehmers erst bei Erreichen einer Endposition des Mitnehmers auf eine gegenüberliegende Dichtfläche auflegen, erst dann die abzudichtende Nahtstelle verschließen und deshalb nicht ständig in Kontakt sind mit der Wandung der gegenüberliegenden Dichtfläche (4, 18, 20, 22) des Druckraumes (24a, 24b).

2. Druckmittelbeaufschlagbare Schaltkupplung, bei der drehfest und axial auf einer Welle verschiebbare Kupplungsringe (18, 20) mit einer Verzahnung zur Übertragung der Antriebskraft durch ein in Druckräume einleitbares Druckmittel mit entsprechenden Kupplungsringen (6, 8) mit entsprechender Verzahnung, in Eingriff bringbar sind,
**dadurch gekennzeichnet, daß**
die Innenflächen eines im wesentlichen aus den Kupplungsringen (18, 20) und Schließring einem (22) gebildeten beweglichen Mitnehmers und eines feststehenden Druckrings (26) jeweils teilweise einen Druckraum (24a, 24 b) begrenzen, wobei die Nahtstellen zwischen den beweglichen und feststehenden Innenflächen des Druckraumes (24a, 24b) gegeneinander abdichtbar sind, indem Dichtungen (38a, 38b, 40a, 40b) so im Bereich einer Nahtstelle angeordnet sind, daß eine bewegbare Dichtung (40a, 40b) während eines Kupplungsvorganges auf den Druckring (26) aufsetzbar ist und/oder eine bewegbare Wandung der Kupplungsringe (18, 20) auf eine Dichtung (38a, 38b) aufsetzbar ist.

3. Schaltkupplung nach Anspruch 1 oder 2,
**dadurch gekennzeichnet,**
**daß** die Dichtelemente (38a, 38b, 40a, 40b) selbsthaltend in Nuten angeordnet sind.

4. Schaltkupplung nach Anspruch 1, 2 oder 3,
**dadurch gekennzeichnet,**
**daß** die Dichtelemente (38a, 38b, 40a, 40b) aus elastischem Material hergestellt sind.

5. Schaltkupplung nach einem oder mehreren der Ansprüche 1 bis 4,
**dadurch gekennzeichnet,**
**daß** der Druckring (26) mit einem Spiel auf der Welle (4) montiert ist.

6. Schaltkupplung nach einem oder mehreren der Ansprüche 1 bis 5,
**dadurch gekennzeichnet,**
**daß** zwischen dem Druckring (26) und der Welle (4) eine zusätzliche Dichtung (11) angeordnet ist.

7. Schaltkupplung nach einem oder mehreren der Ansprüche 1 bis 6,
**dadurch gekennzeichnet,**
**daß** das Antriebsdrehmoment über Kurzverzahnungen (34) von der Welle (4) auf die Kupplungsringe (18, 20) übertragbar ist.

8. Schaltkupplung nach einem oder mehreren der Ansprüche 1 bis 7,
**dadurch gekennzeichnet,**
**daß** das Antriebsdrehmoment über planverzahnte Verzahnungen (16/32, 14/50) auf die zuschaltbaren Zahnräder (6, 8) übertragen wird.

9. Schaltkupplung nach einem oder mehreren der Ansprüche 1 bis 8,
**dadurch gekennzeichnet,**
**daß** die Kupplungsringe (18, 20) aus identischen Teilen bestehen.

10. Schaltkupplung nach einem oder mehreren der Ansprüche 1 bis 9,
**dadurch gekennzeichnet,**
**daß** die Kupplungsringe (18, 20) und der Schließring (22) durch Befestigungsmittel miteinander verbunden sind.

11. Schaltkupplung nach einem oder mehreren der Ansprüche 1 bis 10,
**dadurch gekennzeichnet,**
**daß** zur Mittenzentrierung und/oder zum beschleunigten Ausschalten des Mitnehmers (18, 20, 22) ein Kugel-Federrastsystem (44, 46, 48) verwendet ist.

## Claims

1. A pressure fluid-actuable clutch in which clutch rings (18, 20) non-rotatably and axially slidable on a shaft can be brought into engagement with a tooth arrangement with corresponding clutch rings (6, 8) with a corresponding tooth arrangement for transmission of the drive force by a pressure fluid which can be introduced into pressure chambers, **characterised in that** the inside surfaces of a stationary pressure ring (26) and a movable entrainment means formed essentially from the clutch rings (18, 20) and a closing ring (22) respectively partially delimit a pressure chamber (24a, 24b), wherein the join locations between the movable and stationary inside surfaces of the pressure chamber (24a, 24b) can be sealed off relative to each other by seals (38a, 38b, 40a, 40b) being so arranged in the region of a join location that upon axial displacement of the entrainment means the seals (38a, 38b, 40a, 40b) bear against an oppositely disposed sealing surface only when the entrainment means reaches an end position, they only then close the join location to be sealed off and therefore are not constantly in contact with the walls of the oppositely disposed sealing surface (4, 18, 20, 22) of the pressure chamber (24a, 24b).

2. A pressure fluid-actuable clutch in which clutch rings (18, 20) non-rotatably and axially slidable on a shaft can be brought into engagement with a tooth arrangement with corresponding clutch rings (6, 8) with a corresponding tooth arrangement for transmission of the drive force by a pressure fluid which can be introduced into pressure chambers, **characterised in that** the inside surfaces of a stationary pressure ring (26) and a movable entrainment means formed essentially from the clutch rings (18, 20) and a closing ring (22) respectively partially delimit a pressure chamber (24a, 24b), wherein the join locations between the movable and stationary inside surfaces of the pressure chamber (24a, 24b) can be sealed off relative to each other by seals (38a, 38b, 40a, 40b) being so arranged in the region of a join location that during a coupling operation a movable seal (40a, 40b) can be applied to the pressure ring (26) and/or a movable wall of the clutch rings (18, 20) can be applied to a seal (38a, 38b).

3. A clutch according to claim 1 or claim 2 **characterised in that** the sealing elements (38a, 38b, 40a, 40b) are arranged self-holdingly in grooves.

4. A clutch according to claim 1, claim 2 or claim 3 **characterised in that** the sealing elements (38a, 38b, 40a, 40b) are made from elastic material.

5. A clutch according to one or more of claims 1 to 4 **characterised in that** the pressure ring (26) is mounted with a clearance on the shaft (4).

6. A clutch according to one or more of claims 1 to 5 **characterised in that** an additional seal (11) is arranged between the pressure ring (26) and the shaft (4).

7. A clutch according to one or more of claims 1 to 6 **characterised in that** the drive torque can be transmitted from the shaft (4) to the clutch rings (18, 20) by way of short splines (34).

8. A clutch according to one or more of claims 1 to 7 **characterised in that** the drive torque is transmitted to the engageable gears (6, 8) by way of face-toothed tooth arrangements (16/32, 14/50).

9. A clutch according to one or more of claims 1 to 8 **characterised in that** the clutch rings (18, 20) comprise'identical members.

10. A clutch according to one or more of claims 1 to 9 **characterised in that** the clutch rings (18, 20) and the closing ring (22) are connected together by fixing means.

11. A clutch according to one or more of claims 1 to 10 **characterised in that** a ball-spring latching system (44, 46, 48) is used for centering and/or for accelerated disengagement of the entrainment means (18, 20, 22).

## Revendications

1. Embrayage à commande par fluide sous pression, dans lequel des couronnes d'embrayage (18, 20) solidaires en rotation d'un arbre et mobiles axialement sur celui-ci, pourvues d'une denture pour transmettre la force d'entraînement, peuvent être amenées en prise avec des couronnes d'embrayage (6, 8) correspondantes, pourvues d'une denture correspondante, à l'aide d'un fluide de pression introduit dans des chambres de pression, **caractérisé en ce que** les surfaces intérieures d'un entraîneur mobile, formé essentiellement des couronnes d'embrayage (18, 20) et d'un anneau de fermeture (22), ainsi que les surfaces intérieures d'un disque de pression (26), fixe, délimitent chacune partiellement une chambre de pression (24a, 24b), les points de jonction entre les surfaces mobiles et les surfaces fixes de la chambre de pression (24a, 24b) étant rendus étanches en disposant des joints (38a, 38b, 40a, 40b) dans la région d'un point de jonction de manière telle que, lors d'un déplacement axial de l'entraîneur, lesdits joints (38a, 38b, 40a, 40b) soient en contact avec une surface d'étanchéité conjuguée seulement lorsqu'une position extrême de l'entraîneur est atteinte et ferment alors le point de jonction à étancher, les joints n'étant de ce fait pas en permanence en contact avec la paroi de la surface d'étanchéité en vis-à-vis (4, 18, 20, 22) de la chambre de pression (24a, 24b).

2. Embrayage à commande par fluide sous pression dans lequel des couronnes d'embrayage (18, 20) solidaires en rotation d'un arbre et mobiles axialement sur celui-ci, pourvues d'une denture pour transmettre la force d'entraînement, peuvent être amenées en prise avec des couronnes d'embrayage (6, 8) correspondantes, pourvues d'une denture correspondante, à l'aide d'un fluide de pression introduit dans des chambres de pression, **caractérisé en ce que** les surfaces intérieures d'un entraîneur mobile, essentiellement formé des couronnes d'embrayage (18, 20) et d'un anneau de fermeture (22), ainsi que les surfaces intérieures d'un disque de pression (26), fixe, délimitent chacune partiellement une chambre de pression (24a, 24b), les points de jonction entre les surfaces mobiles et les surfaces fixes de la chambre de pression (24a, 24b) étant rendus étanches en disposant des joints (38a, 38b, 40a, 40b) dans la région d'un point de jonction de manière telle qu'un joint (40a, 40b) mobile, pendant une opération d'embrayage, puisse être appliqué contre le disque de pression (26) et/ou une paroi mobile des couronnes d'embrayage (18, 20) puisse être appliquée contre un joint (38a, 38b).

3. Embrayage selon la revendication 1 ou 2, **caractérisé en ce que** les éléments d'étanchéité (38a, 38b, 40a, 40b) sont auto-maintenus dans des gorges.

4. Embrayage selon la revendication 1, 2 ou 3, **caractérisé en ce que** les éléments d'étanchéité (38a, 38b, 40a, 40b) sont fabriqués en un matériau élastique.

5. Embrayage selon une ou plusieurs des revendications 1 à 4, **caractérisé en ce que** le disque de pression (26) est monté avec un certain jeu sur l'arbre (4).

6. Embrayage selon une ou plusieurs des revendications 1 à 5, **caractérisé en ce qu'**un joint (1) supplémentaire est disposé entre le disque de pression (26) et l'arbre (4).

7. Embrayage selon une ou plusieurs des revendications 1 à 6, **caractérisé en ce que** le couple d'entraînement est transmis de l'arbre (4) aux couronnes d'embrayage (18, 20) par des dentures courtes (34).

8. Embrayage selon une ou plusieurs des revendications 1 à 7, **caractérisé en ce que** le couple d'entraînement est transmis aux roues dentées (6, 8) à coupler par des dentures planes (16/32, 14/50).

9. Embrayage selon une ou plusieurs des revendications 1 à 8, **caractérisé en ce que** les couronnes d'embrayage (18, 20) sont formées d'éléments identiques.

10. Embrayage selon une ou plusieurs des revendications 1 à 9, **caractérisé en ce que** les couronnes d'embrayage (18, 20) et l'anneau de fermeture (22) sont reliés entre eux par des moyens d'assemblage.

11. Embrayage selon une ou plusieurs des revendications 1 à 10, **caractérisé en ce que** pour le centrage et/ou la connexion accélérée de l'entraîneur (18, 20, 22) on utilise un système à bille et ressort d'encliquetage (44, 46, 48).
